(19) **Europäisches Patentamt**
**European Patent Office**
**Office européen des brevets**

(11) **EP 4 765 656 A1**

(12) **EUROPEAN PATENT APPLICATION**

(43) Date of publication:
**24.06.2026 Bulletin 2026/26**

(21) Application number: **24315597.5**

(22) Date of filing: **20.12.2024**

(51) International Patent Classification (IPC):
$H04B\ 7/024^{(2017.01)}$      $H04B\ 7/04^{(2017.01)}$
$H04B\ 7/0413^{(2017.01)}$     $H04B\ 7/06^{(2006.01)}$
$H04L\ 1/00^{(2006.01)}$

(52) Cooperative Patent Classification (CPC):
**H04B 7/04013; H04B 7/024; H04B 7/0413;
H04B 7/0617; H04L 1/0014; H04L 1/0026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Commissariat à l'Energie Atomique et
aux Energies
Alternatives
75015 Paris (FR)**

(72) Inventors:
 • **Calvanese Strinati, Emilio
  38054 GRENOBLE CEDEX 09 (FR)**
 • **Di Lorenzo, Paolo
  00136 ROMA (IT)**

(74) Representative: **Cabinet Beaumont
  4, Place Robert Schuman
  B.P. 1529
  38025 Grenoble Cedex 1 (FR)**

(54) **A COMMUNICATION SYSTEM AND A METHOD OF COMMUNICATION**

(57) The present disclosure relates to a method of transmitting a semantic symbol from a transmitter (115) to a receiver (130) over a wireless communication channel (125), the method comprising:
- relaying the semantic symbol from the transmitter (115) to the receiver (130) by a multiple-input multiple-output (MIMO) device comprising a plurality of input-output elements; and
- controlling by the transmitter (115) a physical transformation of a physical layer of the MIMO device to compensate for an alteration of the semantic symbol between the transmitter (115) and the receiver (130).

100

FIG 1

# Description

## Technical field

The present disclosure relates generally to a communication system and in particular to the communication of a semantic symbol over a wireless channel.

## Background art

A semantic communication focuses on relaying a meaning of a message rather than a correct form or structure of the message. Semantic communication is used to communicate knowledge between agents equipped with either natural or artificial intelligence. An advantage of semantic communication with respect to standard data communication is that it is possible to transmit a given amount of information using a lower communication bandwidth or to transmit more information without increasing the communication bandwidth.

During a semantic communication between two agents, which may or may not have a shared language or logic, a semantic extraction is performed by a sender on raw data to extract a meaning and a semantic decoding is performed by the receiver.

A difficulty is that a semantic noise or mismatch between the sender and the receiver can have a catastrophic impact on the success of the transmission of the message.

There is a need for more robust and higher quality semantic communication.

## Summary of Invention

One embodiment provides a method of transmitting a semantic symbol from a transmitter to a receiver over a wireless communication channel, the method comprising:

- relaying the semantic symbol from the transmitter to the receiver by a multiple-input multiple-output device comprising a plurality of input-output elements; and
- controlling by the transmitter a physical transformation of a physical layer of the MIMO device to compensate for an alteration of the semantic symbol between the transmitter and the receiver.

According to one embodiment, the method further comprises estimating, by the transmitter, a semantic transformation to be applied to the semantic symbol prior to the transmission in order to obtain a transparent semantic channel.

According to one embodiment, the method further comprises estimating, by the transmitter, by the receiver or by a central unit, a quality of a physical layer of the wireless communication channel.

According to one embodiment, the method further comprises an estimation of the physical transformation to be applied to the MIMO device based on the estimation of the semantic transformation and based on the quality of the physical layer of the wireless communication channel.

According to one embodiment, the estimation of the physical transformation is performed by the transmitter.

According to one embodiment, the estimation of the physical transformation is performed by the MIMO device.

According to one embodiment, the physical transformation includes the modification of at least one of:

- a phase shift introduced by the input-output elements of the MIMO device;
- quantization of the input-output elements of the MIMO device;
- an amplitude modulation applied to a signal transmitting the semantic symbol;
- an adaptive frequency response applied to the signal transmitting the semantic symbol;
- a polarization of the signal transmitting the semantic symbol; and
- the number of active input-output elements of the MIMO device.

According to one embodiment, the method further comprises estimating, by the receiver, the impact of the physical transformation on the semantic symbol.

According to one embodiment, the MIMO device is a reconfigurable intelligent surface.

According to one embodiment, the input-output elements are reflective elements.

According to one embodiment, the input-output elements are antenna elements.

According to another aspect, there is provided a communication system comprising:

- a transmitter configured to transmit a semantic symbol over a wireless communication channel to a receiver; and
- a MIMO device comprising a plurality of antenna elements and configured to relay the semantic symbol from the transmitter to the receiver,

wherein the transmitter is configured to control the MIMO device to apply a physical transformation of a physical layer of a MIMO device to compensate for an alteration of the semantic symbol between the transmitter and the receiver.

According to one embodiment, the communication system further comprises:

- one or more further transmitters, each further transmitter being configured to transmit the semantic symbol over the wireless communication channel to the receiver; and

- one or more further MIMO devices, each further MIMO device being configured to relay the semantic symbol from the transmitter or one of the one or more further transmitters to the receiver.

According to one embodiment, the communication system further comprises:

- one or more further receivers, each further receiver being configured to receive the semantic symbol over the wireless communication channel from the transmitter; and
- one or more further MIMO devices, each further MIMO device being configured to relay the semantic symbol from the transmitter to the receiver or one of the one or more further receivers.

Brief description of drawings

The foregoing features and advantages, as well as others, will be described in detail in the following description of specific embodiments given by way of illustration and not limitation with reference to the accompanying drawings, in which:

Figure 1 is a diagram illustrating a communication system according to an example embodiment of the present disclosure;

Figure 2 illustrates an example of a communication system comprising two communication sub-systems, according to an example embodiment of the present disclosure;

Figure 3 illustrates an example of a language mismatch according to an example embodiment of the present disclosure;

Figure 4 illustrates the communication system of Figure 1 in more details according to another example embodiment of the present disclosure;

Figure 5 is a diagram illustrating the communication system of Figure 1 further comprising a multiple-input multiple-output (MIMO) device according to an example embodiment of the present disclosure;

Figure 6 is a flow chart of example steps of a process of the communication between a transmitter and a receiver of the communication system of Figure 1 according to an example embodiment of the present disclosure; and

Figure 7 illustrates an example of semantic extraction according to another example embodiment of the present disclosure.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, techniques of data modulation and waveform shaping have not been described in detail, standard techniques being applicable to the embodiments described herein.

Unless indicated otherwise, when reference is made to two elements connected together, this signifies a direct connection without any intermediate elements other than conductors, and when reference is made to two elements coupled together, this signifies that these two elements can be connected via a wired connection or they can be coupled via a wireless connection and/or via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

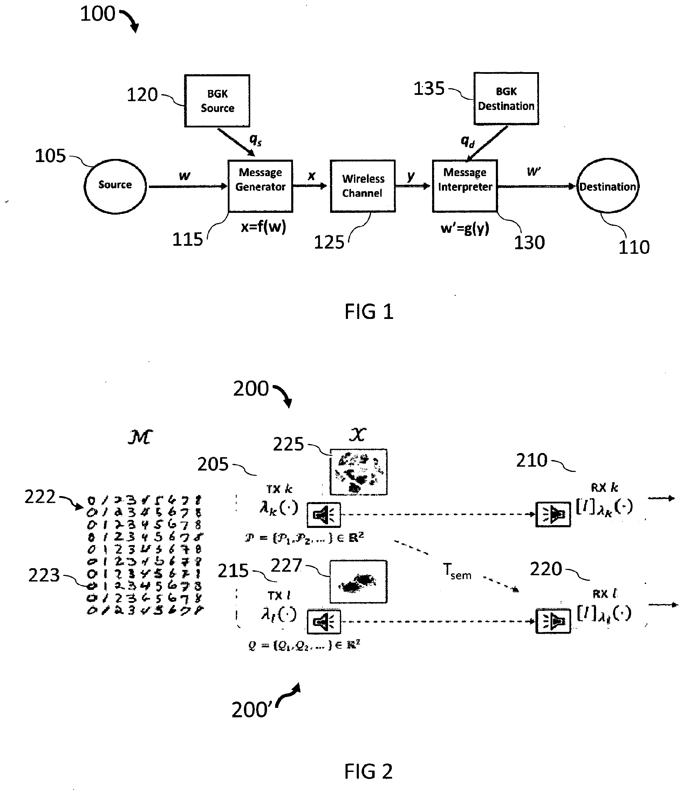

Figure 1 is a diagram illustrating a communication system 100 according to an example embodiment of the present disclosure.

According to one embodiment, a first agent 105 ("Source") has a semantic message x to transmit to a second agent 110 ("Destination"). The first agent 105 is for example a person, an internet-of-things device, a robot, a camera, etc. configured to generate raw data w capturing the semantic message x, for example from its surroundings. In particular, the raw data w comprises the semantic message x, meaning that the semantic message x can be derived from this raw data w. According to some embodiments, additional background knowledge or side information is for example used to generate the semantic message x from W. The first agent 105 is for example also referred to as the "teacher" or the "source". The second agent 110 is for example a mobile terminal, a smartphone, a mobile Edge host, an internet-of-things device such as a sensor, an industrial internet-of-things system, etc. The second agent 110 is for example also referred to as the "learner" or the "destination".

The communication system 100 comprises a transmitter 115 ("Message Generator"), a wireless communication channel 125 ("Wireless Channel") and a receiver 130 ("Message interpreter"). The communication system 100 is configured to relay the semantic message x from the first agent 105 to the second agent 110. In some embodiments, the communication system 100 is configured for telecommunication applications and the wireless communication channel 125 is a 5G network or a beyond-5G network or a 6G network.

The first agent 105 for example loads the raw data w to the transmitter 115. The raw data w is for example a picture, a text, a video, etc. The transmitter 115 is for example configured to generate the semantic message x based on the raw data w and a source background knowledge $q_s$ 120 ("BGK source"). The source background knowledge $q_s$ 120 is for example stored in a memory of the transmitter 115. A first conversion operation f of the raw data w into the semantic message x, so that x=f(w), for example comprises at least one of semantic extraction, semantic equalization and channel encoding. The semantic message x for example corresponds to features of the raw w and relationships between the features.

The semantic message x is then sent by the transmitter 115 via the wireless communication channel 125. During the transmission, the semantic message x is for example altered. For example, the wireless channel 125 introduces noise or alters the frequency spectrum of the semantic message x or introduces interference, fading or blocking. Therefore, a transmitted message y, as received by the receiver over the wireless channel 125 is for example different from the corresponding semantic message x sent by the transmitter 115.

Furthermore, the transmission of the semantic message x from the source 105 to the destination 110 for example introduces semantic noise, for example due to limited knowledge representation capabilities caused by partial observations, limited memory, hardware impairments or the unavailability of computational resources. The transmission for example further introduces semantic noise due to logic or language mismatch between the first agent 105 and the second agent 110, for example due to different rules on how knowledge is represented and semantic information is extracted and interpreted or due to a representation misalignment of semantic messages. The language mismatch may also occur between the transmitter 115 and the receiver 130. If not accounted for and compensated for, the language mismatch for example causes defective semantic strategies to be applied to the semantic transmission.

The receiver 130 is configured to receive the transmitted message y and to generate a received message w' based on the transmitted message y and a destination background knowledge $q_d$ 135 ("BGK destination"). The destination background knowledge $q_d$ 135 is for example stored in a memory of the receiver 130. The received message w' is for example interpretable by the second agent 110 and for example has the same or an equivalent semantic meaning as the initial raw data w, that is to say that the received message w' and the raw data w would for example drive the second agent 110 to the same conclusions. A second conversion operation g of the transmitted message y into the received message w', so that w'=g(y), for example comprises at least one of channel decoding, semantic equalization and semantic decoding.

Figure 2 illustrates an example of a communication system comprising two communication sub-systems 200, 200', each sub-system being a communication system 100 according to the embodiment of Figure 1, the two sub-systems having a different representation from each other and a different interpretation logic from each other.

A first communication sub-system 200 comprises a first transmitter TX k 205 and a first receiver RX k 210, for example the transmitter 115 and the receiver 130 of Figure 1.

A second communication sub-system 200' comprises a second transmitter TX k 215 and a second receiver RX k 220, for example the transmitter 115 and the receiver 130 of Figure 1.

The first transmitter TX k 205 and the second transmitter TX l 215 are for example configured to observe an image 222 and are configured to encode one or more underlying information elements. The image 222 for example comprises representations of a plurality of digits. The first receiver RX k 210 is configured to receive a first transmitted message $y_k$ from the first transmitter TX k. The second receiver RX l 220 is configured to receive a second transmitted message $y_l$ from the second transmitter TX l.

For example, the first receiver RX k 210 is configured to interpret a numerical value of a digit 223 of the image 222. In contrast, the second receiver RX l is for example configured to interpret the parity of the digit 223 of the image 222.

Each transmitter 205, 215 applies certain logic, or a given language, or both, to encode data. Each receiver 210, 220 has a mechanism called a language interpreter $[l]\lambda k(.)$, $[l]_{\lambda l}(.)$ to decode the transmitted message $y_k$, $y_l$. The two transmitters 205, 215 operate on the same image 222 but they, for example, structure differently information underlying observations for their respective receivers 210, 220. The semantic message x of Figure 1 corresponds to the encoded data.

In the present description, the term "language" refers to a way to represent information that preserves meaning and facilitates understanding, processing, and reasoning by artificial intelligence or natural agents. Therefore, the term "language" also includes logic, knowledge representation, etc. For example, in the example of Figure 2, interpreting the numerical value of the digit 223 or interpreting its parity correspond to two different languages.

Both encoding, or semantic extraction, and decoding, or semantic interpretation, depend on the language and on the available background knowledge 120 of the transmitters 205, 215 and on the language interpreter I and the available background knowledge 135 of the receivers 210, 220. The background knowledge 120, 135 complement the actual instance of observation and condition the way semantic extraction and interpretation are performed.

According to a first embodiment, the transmitter 205, 215 ignores the goal of the receiver or its need for structured data to correctly interpret the associated meaning. The transmitter's semantic extraction function is independent from the need of the receiver 210, 220 and the language interpreter I of the receiver to interpret the semantic message x.

According to a second embodiment, also called "pragmatic", each of the transmitters 205, 215 conditions its semantic extraction strategy to maximize the understanding of the semantic messages x based on at least one of the language interpreter I and the background knowledge $q_d$ 135 of the corresponding receiver 210, 220.

A semantic channel is a logical channel, that is to say a logical means for communicating and interpreting the semantic message x amongst a plurality of intelligent agents 105, 110 having reasoning and processing capabilities that follow a set of possible logic or languages. The semantic message x is interpretable or not by the receiver 210, 220 depending on the meaning that the transmitter 205, 215 has assigned to it. To ensure a correct interpretation by the receiver 210, 220, the transmitter 205, 215 and the receiver 210, 220 for example agree on and implement a common or compatible communication strategy at each communication. For example, they have a common message representation or compatible semantic extraction and interpretation functions, etc.

In the example of Figure 2, the first receiver 210 correctly interprets the first transmitted message $y_k$ transmitted by the first transmitter 205, for example because they agree on the same communication strategy. The semantic channel is said to be transparent. The first transmitter 205 and the first receiver 210 for example agree on the same or compatible language, such as rules, logic, languages and the representation for encoding and interpreting information. In contrast, the second receiver 220 fails to recover the meaning intended by the first transmitter 205. The semantic channel between the first transmitter 205 and the second receiver 220 is said to be opaque. Therefore, a quality of a semantic channel reflects a semantic mismatch between the languages of the transmitter 205, 215 and the receiver 210, 220. The semantic mismatch is for example caused by differing hardware components between the source and destination, with different approximation rules or quantization precision, or by differing machine learning or artificial intelligence models and trainings between the source and destination or by differing internal representations of processed data.

In the example of Figure 2, M is an observation space and X is a semantic space. For example, the observation space M and the semantics space X are topological spaces, for example continuous or discrete spaces. Two possible representations 225, 227 of the semantic space X are illustrated. The raw data w of Figure 1 for example corresponds to the values of the pixels of the image 222. The generation of the semantic message x from the raw data w is for example modeled by a first mapping function $\lambda_k : \mathcal{M} \rightarrow \mathcal{X}$ of the first transmitter 205 and by a second mapping function $\lambda_l : \mathcal{M} \rightarrow \mathcal{X}$ of the second transmitter 215. The mapping functions $\lambda_k$, XI are for example deterministic or stochastic. The mapping functions $\lambda_k$, $\lambda_l$ endow an observation from the observation space M with a semantic meaning of the semantics space X. The mapping function $\lambda_k$, $\lambda_l$ defines a way to partition the semantic space X and associates to each partition a semantic meaning. For example, P = {P1, P2, ...} and Q = {Q1, Q2, ...} are two partitions of a probability space (X,B, $\mu$) over the semantic space X, where $\mu$ is a probability measure over X and B is a $\sigma$-algebra on X.

Taking the example already described above, the first receiver 210 is configured to interpret the numerical value of the digit 223 of the image 222 while the second receiver 220 is configured to interpret the parity of the digit 223. Therefore, in order for the second receiver 220 to correctly interpret the first transmitted message $y_k$ sent by the first transmitter 205, a semantic transformation $T_{sem}$ has to be performed by at least one of the transmitter 205 and the receiver 220.

The semantic channel refers to the means of transmitting information wirelessly using a system that utilizes semantic techniques for a representation, interpretation, and transmission of meaning. The semantic channel is for example a natural language processing, a machine learning algorithm or other form of data representation that allows for the transmission of meaning over a wireless network. In the context of natural language processing (NLP) and computational linguistics, semantic channels are instrumental to represent the various ways in which intelligent agents 105, 110 can express their thoughts and ideas in a way that can be understood by other intelligent agents.

A semantic distortion refers to a phenomenon in which the meaning of the semantic message x is altered, distorted, and/or changed in some way as it is transmitted from the transmitter 205, 215 to the receiver 210, 220 and/or misinterpreted in some way as it is received by the receiver 210, 220. The semantic distortions are for example caused by errors in a physical communication channel, for example caused by noise or interference in the wireless channel, as well as caused by a mismatch between at least one of the rules, logic, languages and representations of the transmitter 205, 215 and the corresponding rules, logic, languages or representations of the receiver 210, 220. This can lead to misunderstandings, communication breakdowns, and difficulties in achieving an intended goal of a semantic communication.

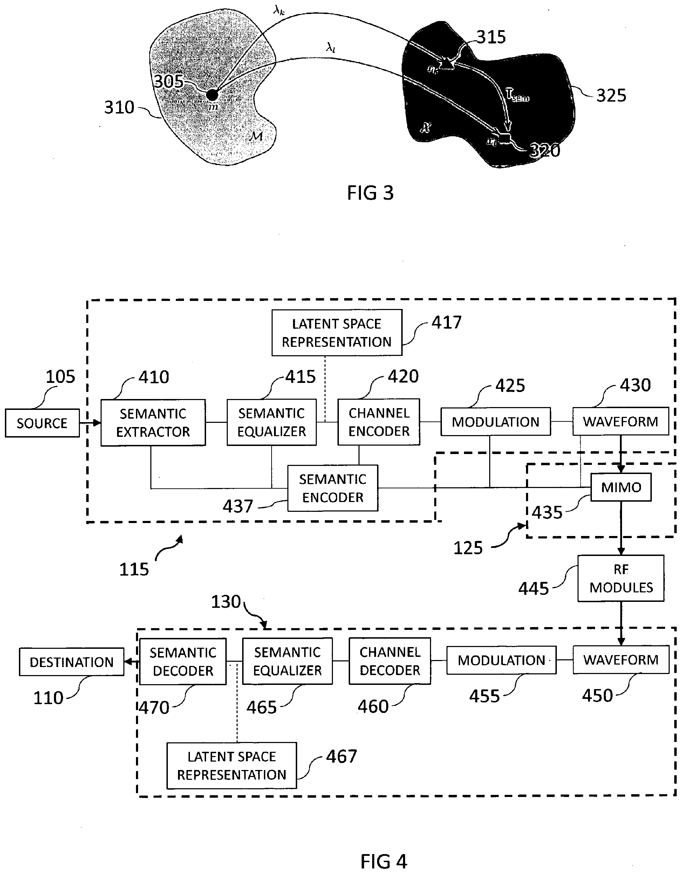

Figure 3 illustrates an example of a language mismatch according to an example embodiment of the present disclosure.

Some elements of Figure 3 are identical to elements of Figure 2. These elements are labeled with the same references and will not be described again in detail.

A message m 305 of the observation space M 310 is for example a subset of the raw data w of Figure 1. For example, the message m corresponds to a portion of the values of the pixels of the image 222 of Figure 2, for example to the values of the pixels where the digit 223 is represented.

The message m is for example represented by a first semantic symbol $x_k$ 315 by the first mapping function $\lambda_k$ and is for example represented by a second semantic symbol $x_l$ 320 by the second mapping function $\lambda_l$. The semantic symbols $x_k$ and $x_l$ are included in the semantics space X 325 and correspond to meanings associated to the message m. The mapping functions $\lambda_k$ and $\lambda_l$ correspond respectively to the language of the first transmitter 205 and to the language of the second transmitter 215. In the example of Figure 3, the semantic symbols $x_k$ and $x_l$ are different meaning that there is a mismatch between $x_k$ and $x_l$. In order to obtain $x_l$ from $x_k$, the semantic transformation Tsem is for example applied to $x_k$.

We refer to A as a language generator. Here, A is for example a stochastic language, in which case, we refer to $\lambda(m)$ as the realization of this stochastic process: A(m) = x - p(x|m).

A generated semantic symbol $x_k$, $x_l$ is for example interpreted for the mapping function $\lambda$ using the language interpreter I. The language interpreter is defined by the mapping function: $[I]_\lambda : \mathcal{X} \to [\mathcal{M}]_\lambda$. For example, $[\mathcal{M}]_\lambda$ is a target message space or space of interpretation, which is for example different from $\mathcal{M}$. Therefore, $[I]_\lambda$ is for example not the inverse function $\lambda^{-1}$. In some embodiments, the mapping function $\lambda$ is for example a one-to-many mapping: the message m is for example associated with different semantic symbols x, each semantic symbol $x_k$, $x_l$ conveying the same information. In other embodiments, the mapping function $\lambda$ is for example a many-to-one mapping: multiple messages m are represented with the same semantic symbol $x_k$, $x_l$. In this case, the language is said to be a rich language.

$(\mathcal{M}, \lambda, [I]_\lambda, [\mathcal{M}]_\lambda, \mathcal{X})$ fully defines a language. A language can be limited. Indeed, the mapping function A can be a partial function: not all messages m of the world have a meaning or can be represented through that language. Similarly, the language interpreter $[I]_\lambda$ may fail to recover the intended meaning associated to the message m. For example, let $\lambda : \mathbb{Z} \to \mathbb{N}$ define a language

generator such that $\forall n \in$ N, $m \in \mathbb{Z}$, $\lambda(n)$ = m if, and only if, $m^2 = n$. In this case, $\lambda(n)$ is only defined if n is a perfect square: $\lambda(9)$ = 3 but $\lambda(10)$ is undefined.

Figure 4 illustrates the communication system 100 of Figure 1 in more detail according to another example embodiment of the present disclosure.

Initially, the first agent 105 ("SOURCE") of Figure 1 has the semantic message x to share with the second agent 110 ("DESTINATION") of Figure 1. For example, the raw data w is acquired or updated by the transmitter 115, the raw data w for example being sent or loaded to the transmitter 115 by the first agent 105.

The transmitter 115 for example comprises a semantic extractor module 410 ("SEMANTIC EXTRACTOR") configured to perform a semantic extraction on the raw data w to extract one or more semantic concepts from the raw data w. The semantic extraction is for example performed by an artificial neural network such as a global neural network. The semantic extractor 410 is for example configured to perform at least one of extracting semantics, creating or updating machine learning models and operating machine learning operations. For example, the semantic extractor 410 is configured to extract a numerical value of a digit or a parity of the digit from pixel values of an image illustrating the digit.

According to one embodiment, semantics are represented using graphs, and relations and/or correlations between concepts are also extracted.

The semantic extraction is for example performed based on the source background knowledge $q_s$ available to the transmitter 115 and based on the mapping function A of the transmitter 115. The semantic concepts are for example selected by the semantic extractor 410 based on the targeted semantic compression and resulting communication and for example based on a targeted complexity, for example the average number of semantic symbols required to represent a message m. For example, an artificial neural network attention mechanism is used to perform the semantic extraction.

The semantic extractor 410 is for example coupled to a first semantic equalizer 415 ("SEMANTIC EQUALIZER"), also referred to as semantic modulator, of the transmitter 115 configured to perform a first semantic equalization. The first semantic equalizer 415 for example applies a first semantic transformation $T_{sem}^1$ on the semantic concepts in order to map the semantic concepts into semantic symbols, for example the semantic symbols $x_k$ and $x_l$ of Figure 3. The first semantic transformation $T_{sem}^1$ for example takes into account future alterations of the semantic concepts, for example caused by the wireless communication channel 125 ("CHANNEL") and for example takes into account any mismatch between the language of the transmitter 115 and the language of the receiver 130. In particular, different semantic symbols are for example represented with a different number of bits that are then physically transmitted over the wireless communication channel 125.

According to other embodiments, the transmitter 115 does not comprise the semantic equalizer 415.

The semantic symbols, or the semantic concepts in the absence of the semantic equalizer 415, are for example represented in a first latent space representation 417 ("LATENT SPACE REPRESENTATION"). A latent space for example provides a compact and meaningful representation of complex data, for example the semantic symbols, in a lower-dimensional, feature-rich space. A semantic latent space refers to a collection of vectors that can be transmitted. The collection of vectors for example correspond to a representation of a language following semantic extraction and interpretation for example performed by machine learning or artificial intelligence.

The first latent space representation 417 is for example provided in a form of a knowledge graph, for which its constitution depends on the semantic language of the transmitter 115. The semantic extractor 410 and the semantic equalizer 415 for example use machine learning techniques to generate the latent space to efficiently encode data, to complement such data with synthetic data and/or to operate a transformation on such data.

Several transformations are possible to encode, generate and transform data efficiently. Examples of such transformations are: dimensionality reduction, interpolation or extrapolation, composition on latent spaces, for instance adopting latent space arithmetic techniques for data dimensionality reduction and feature-rich extraction, latent space clustering to group data points in first latent space representation 417 based on a similarity or equivalence metric, disentanglement of latent space representation by structuring the first latent space representation 417 such that different dimensions represent independent factors of variation, making the latent space more interpretable and controllable.

The first semantic equalizer 415, or directly the semantic extractor 410, is for example coupled to a channel encoder 420 ("CHANNEL ENCODER") of the transmitter 115. The channel encoder 420 is for example configured to encode the semantic symbols into the semantic message x in order to be transmitted through the wireless communication channel 125. In other embodiments, the transmitter does not comprise a semantic equalizer and the semantic symbols are identical to the semantic concepts. A first physical transformation $T_{phy}^1$ is for example applied to the semantic symbols to generate the semantic message x. The first physical transformation $T_{phy}^1$ is for example configured to compensate for alterations that are for example introduced by a transmission through the wireless communication channel 125.

The first semantic transformation $T_{sem}^1$ and the first physical transformation $T_{phy}^1$ are configured to generate a semantic message x that is interpretable by the receiver 130, after its transmission through the wireless communication channel 125.

The channel encoder 420 is for example coupled to wireless communication circuits of the transmitter 115, for example to modulate the semantic message x by a modulation circuit 425 ("MODULATION") and to shape the waveform of the semantic message x by a waveform circuit 430 ("WAVEFORM").

The transmitter 115 is configured to transmit the semantic message x to the receiver 130 through the wireless communication channel 125. In particular, the wireless communication channel 125 comprises at least one multiple-input multiple-output (MIMO) device 435 ("MIMO") comprising a plurality of input-output elements. The input-output elements are for example reflective elements or antenna elements. The MIMO device 435 is for example a reconfigurable intelligent surfaces (RIS) device. A RIS is a programmable surface composed of an array of passive, or active, elements that can manipulate electromagnetic waves in a controlled manner. It is designed to enhance the performance of wireless communication systems by controlling the propagation environment. A more detailed definition of a RIS and its functions can be found in the following article: "Reconfigurable, intelligent, and sustainable wireless environments for 6G smart connectivity" by E. Calvanese Strinati and al. published in IEEE Communications Magazine in 2021. A physical transformation of a physical layer of the MIMO device is for example operated to compensate for an alteration of the semantic message x caused by the wireless communication channel 125.

According to one embodiment, the MIMO device comprises an "intelligent unit" and is configured to compute a transformation to apply to the semantic message and to compute the corresponding parameters to set in the MIMO device.

According to another embodiment, the MIMO device does not comprise an "intelligent unit". Computations are performed in the transmitter 115 and parameters of the MIMO device are sent by the transmitter 115 to set the MIMO device 435.

The wireless communication channel 125 is configured to reach the receiver 130 either directly or through a single-hop or multi-hop communication. For example, the wireless communication channel 125 is configured to reach the receiver 130 through a base station, a small cell, a relay, a RIS, etc. deployed in the communication environment.

The transmitter 115 further comprises a semantic encoder 437 ("SEMANTIC ENCODER"). The semantic encoder 437 is configured to estimate the parameters of a physical transformation T and to generate the corresponding parameters to apply to a physical layer of the MIMO device 435. The physical transformation T is defined to compensate for alterations of the semantic concept during its transmission and to compensate for optional semantic mismatches. For example, the semantic encoder 437 is coupled to the semantic extractor and/or the semantic equalizer 415 and configured to receive the semantic concept and/or the semantic symbol in input. For example, the semantic encoder 437 is coupled to, and configured to send configuration parameters to, at least one of the channel encoder 420, the modulation circuit 425 and the waveform circuit 430. The semantic encoder 437 is further coupled to the MIMO device 435 and configured to apply the physical transformation T to a physical layer of the MIMO device 435.

According to one embodiment, the semantic encoder 437 receives the semantic concepts from the semantic extractor 410 and is configured to encode the semantic concepts in the form of latent space vectors. The semantic equalizer 415 is for example configured to perform the first semantic equalization on the semantic concepts. The semantic symbols are for example represented in the first latent space representation 417 with a different latent space dimension, and different latent space vectors, with respect to the ones used by the semantic encoder 437. For example, the semantic equalizer 415 performs a linear or non-linear transformation, for example a rotation, of the latent space vectors.

The wireless communication channel 125 for example comprises or is coupled to additional circuits 445 ("RF modules"), for example configured to apply transformations to the semantic message x. The additional circuits 445 are for example known to a person skilled in the art.

The receiver 130 is configured to receive the transmitted message y. The transmitted message y is the signal, received at an input of the receiver 130 and corresponding to the semantic message x, sent by the transmitter 115. The transmitted message y is for example different from the semantic message x due to alterations of the semantic message x caused by at least one of the MIMO device 435, the wireless communication channel 125 and the additional circuits 445.

The receiver 130 for example comprises further wireless communication circuits, for example to shape the waveform of the transmitted message y by a waveform circuit 450 ("WAVEFORM") and to modulate the transmitted message y by a modulation circuit 455 ("MODULATION").

The further wireless communication circuits are for example coupled to a channel decoder 460 ("CHANNEL DECODER") of the receiver 130. The channel decoder 460 is for example configured to decode the transmitted message y to generate a transmitted semantic message. A second physical transformation $T_{phy}^2$ is for example applied to the transmitted message y. The second physical transformation $T_{phy}^2$ is for example configured to reverse the first physical transformation $T_{phy}^1$ as well as transformations caused by the wireless communication channel 125 and the additional circuits 445. The second physical transformation $T_{phy}^2$ is for example configured so that the transmitted semantic message y is interpretable by the receiver 130. The first physical transformation $T_{phy}^1$ and the second physical transformation $T_{phy}^2$ are for example calculated by resolving an optimal transport theory problem.

The channel decoder 460 is for example coupled to a second semantic equalizer 465 ("SEMANTIC EQUALIZER") of the receiver 130 configured to perform a second semantic equalization. The second semantic equalizer 465 for example applies a second semantic transformation $T_{sem}^2$ on the transmitted semantic message in order to extract transmitted semantic symbols.

The transmitted semantic symbols are for example represented in a second latent space representation 467 ("LATENT SPACE REPRESENTATION"). The second latent space representation 467 is for example different from the first latent space representation 417, it for example having a different number of dimensions and a different representation base, there for example being a misalignment between the first and second latent space representations. A semantic concept can for example be represented in both the first and second latent space representations, provided that some transformations are performed. A transparent semantic channel corresponds to a transmitter and a receiver that have their representations aligned in their respective representation spaces.

The first semantic transformation $T_{sem}^1$ and the second semantic transformation $T_{sem}^2$ are configured so that the transmitted semantic symbols match the semantic symbols generated by the first semantic equalizer 415 and account for possible misalignment between the first latent space representation and the second latent space representation. The first semantic transformation $T_{sem}^1$ and the second semantic transformation $T_{sem}^2$ are for example calculated by resolving an optimal transport theory problem.

In some embodiments, for example in the absence of a pragmatic semantic strategy, semantic transformation is only performed by the receiver 130 and the first semantic transformation $T_{sem}^1$ corresponds to the identity, that is to say that the semantic concepts are unchanged by the first semantic equalizer 415.

Using a pragmatic approach, several embodiments are possible.

According to one embodiment, the receiver 130 is configured to identify and invert a transformation introduced by the joint semantic and physical channel on the semantic concepts. The receiver 130 is for example configured to operate the second physical transformation $T_{phy}^2$, to send to the transmitter 115 the parameters to apply to the MIMO device 435 and optionally to perform the second semantic transformation $T_{sem}^2$.

According to an alternative embodiment, the transmitter 115 is configured to operate the first physical transformation $T_{phy}^1$ to perform a semantic alignment of the physical channel and to operate the first semantic transformation $T_{sem}^1$ to perform a semantic equalization of the semantic channel by intentionally distorting the semantic concepts to obtain a transparent semantic channel and make the semantic concepts interpretable by the receiver 130. In this case, the second semantic transformation $T_{sem}^2$ corresponds to the identity, that is to say that the transmitted semantic message is unchanged by the second semantic equalizer 465.

According to another embodiment, both the receiver 130 and the transmitter 115 perform a physical and/or a semantic transformation, which results in a transparent semantic channel.

The second semantic equalizer 465 is for example coupled to a semantic decoder 470 ("SEMANTIC DECODER") of the receiver 130. The semantic decoder 470 is for example configured to perform a semantic decoding on the transmitted semantic symbols to extract one or more transmitted semantic concepts corresponding to the received message w' of Figure 1. The semantic decoding is for example performed by an artificial neural network such as a global neural network. The received message w' has the same semantic meaning as the raw data w: it for example has the same features and the same relationships between the features. The semantic decoder 470 is for example configured to perform at least one of interpreting semantics, generating or updating machine learning models and performing machine learning operations.

The receiver 130 is for example configured to transmit the received message w' to the second agent 110. For example, the received message w' is displayed on a screen, sound is emitted or the received message w' is stored in a memory of the receiver 130 and is accessible by the second agent 110.

According to some embodiments, the communication system 100 described in relation with Figures 1 and 4 can be extended to multiple first agents 105 and multiple corresponding transmitters 115. For example, the multiple first agents 105 have the same raw data w that they wish to share with the same second agent 110. Each first agent 105 for example sends a different semantic message x based on its own language and its own source background knowledge $q_s$. For example, both the first semantic transformation $T_{sem}^1$ and the first physical transformation $T_{phy}^1$ differ between the multiple first agents 105. Each of the multiple first agents 105 shares its own processed version of observed data to assist the receiver 130 to perform an inference task or to extract selected information.

According to alternative embodiments, the communication system 100 described in relation with Figures 1 and 4 can be extended to multiple second agents 110 and multiple corresponding receivers 130. For example, the multiple second agents 105 receive the same transmitted message y from the transmitter 115. Each receiver 130 for example processes the transmitted message y differently to account for its own language and its own source background knowledge $q_s$. For example, both the second semantic transformation $T_{sem}^2$ and the second physical transformation $T_{phy}^2$ differ between the multiple receivers 130.

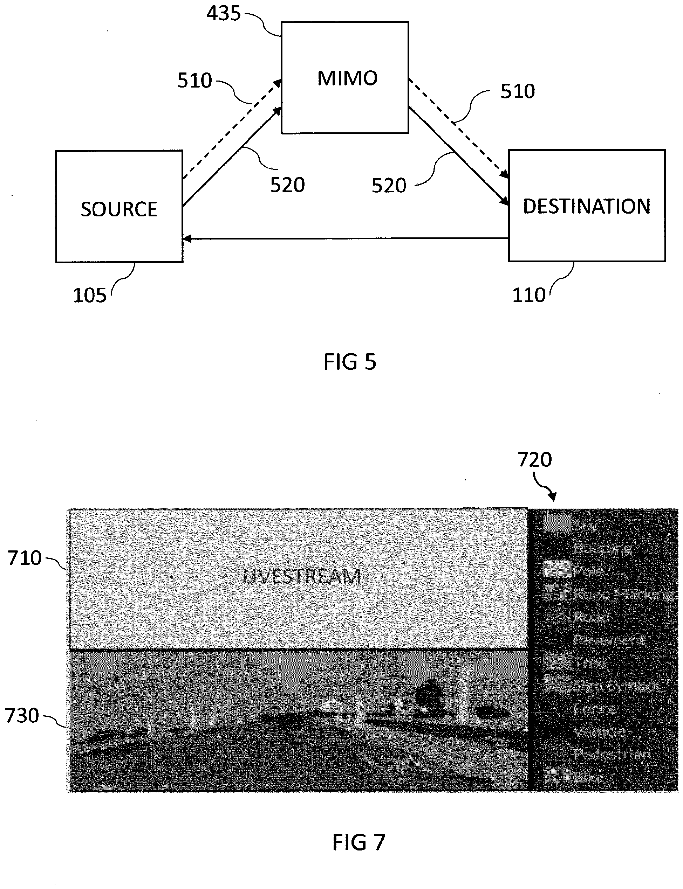

Figure 5 is a diagram illustrating the communication system 100 of Figure 1 further comprising a multiple-input multiple-output (MIMO) device according to an example embodiment of the present disclosure.

The first agent 105 ("SOURCE") is configured to record or generate the raw data w, not illustrated in Figure 5. The raw data w for example corresponds to observations of a scene, for example a picture, a recording, etc., or observations of the cyber world, for example digital information.

The first agent 105 is further configured to transmit one or more meaningful semantic concepts from the raw data w to the second agent 110 ("DESTINATION"), which corresponds to a semantic transmission 510 through the semantic channel. However, the semantic concepts are altered during their physical transmission 520 through the physical channel by the transmitter 115, the wireless communication system 125 and the receiver 130, which can affect the effectiveness of the semantic transmission.

Therefore, corrections are applied to the semantic concepts to compensate for these alterations. In particular, the transmitter 115 controls a physical transformation of a physical layer of the at least one MIMO device 435 ("MIMO") to apply a correction.

The corrections enable the second agent 110 to correctly interpret semantic information that has been extracted from the raw data w by the transmitter 115. The second agent for example makes inferences on the basis of the semantic information to make.an informed decision.

According to one embodiment, the receiver 130 sends feedback 530 to the transmitter 115 on the quality of the semantic transmission 510 and the transmitter 115 takes into account the feedback 530 by adjusting at least one of the first semantic transformation $T_{sem}^1$ and the first physical transformation $T_{phy}^1$.

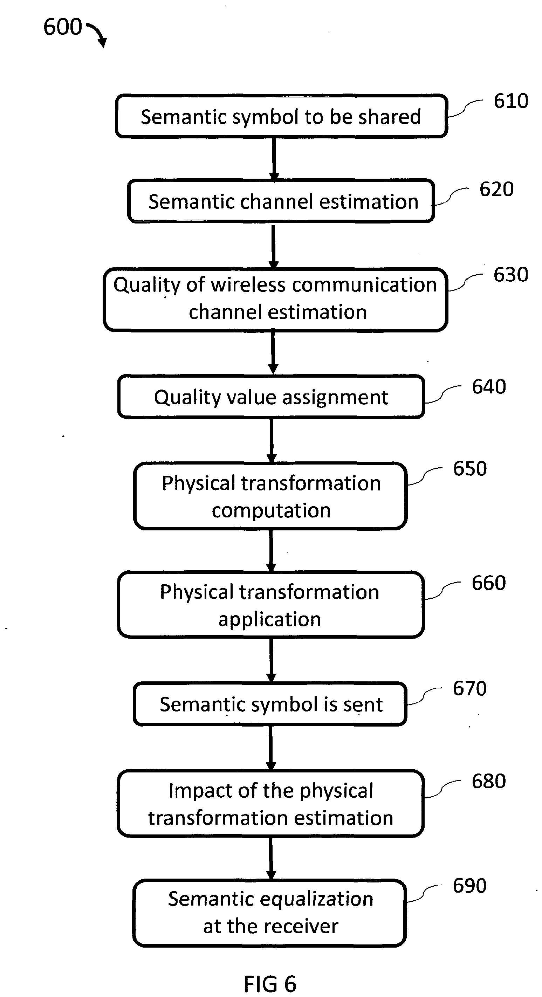

Figure 6 is a flow chart of example steps of a process 600 of a communication between the transmitter 115 and the receiver 130 of the communication system 100 of Figure 1 according to an example embodiment of the present disclosure. The process 600 is for example implemented by elements of the communication system 100 including the semantic encoder 437 and each of the steps may be implemented in hardware, and/or by software executed by a suitable processor.

The process for example comprises a first step 610 ("Semantic symbol to be shared"), the first agent 105 has a semantic concept or a semantic symbol to share with the second agent 110. For example, this occurs when new raw data is available to the transmitter 115 or a new semantic concept has been extracted by the semantic extractor 410 from the raw data w or a new semantic extraction policy that generates new semantic concepts is employed by the semantic extractor 410 or a new concept-to-symbol mapping strategy is used by the semantic equalizer 415, for example a difference in the number of symbols per concept is adopted, etc. However, the wireless communication channel 125, and in particular the MIMO device 435, has several physical limitations. As a consequence, the semantic message sent through the wireless communication channel 125 is for example altered.

The process for example comprises a second step 620 ("Semantic channel estimation") following the first step 610, a quality of the semantic channel is estimated by the semantic encoder 437 of the transmitter 115. Prior to transmission, the transmitter 115 estimates the semantic channel quality, for example via a semantic link quality metric ($LQM_{sem}$). For example, a look-up-table is generated or available in the memory of the transmitter 115. The look-up-table for example maps the semantic link quality metric $LQM_{sem}$ to an estimation of the first semantic transformation $T_{sem}^1$ that the semantic equalizer should apply to obtain a transparent semantic channel. For example, the larger the difference between the language of the transmitter 115 and the language of the receiver 130, the more complex the first semantic transformation $T_{sem}^1$ and the poorer the quality of the semantic channel. In this step, the semantic channel quality is estimated irrespective of a physical channel quality. The estimation is for example based on a statistical analysis, for example using machine learning, and previous transmission parameters, or based on observed data, for example fed back by the receiver 130.

The process for example comprises a third step 630 ("Quality of wireless communication channel estimation") following the second step 620, a quality of the physical channel is estimated by the semantic encoder 437 of the transmitter 115. Prior to transmission, the transmitter 115 estimates an impact of the wireless communication medium on the semantic transmission 510 performance, for example via a physical link quality metric ($LQM_w$) of the wireless communication channel 125. For example, the physical link quality metric $LQM_w$ accounts for an effect of the wireless communication adaptive mechanism on the semantic transmission 510 performance, for example a transmission power selection, a number of antennas, source coding, channel coding including coding rate selection, a modulation order, communication spectral efficiency, for example the modulation order, etc. For example, the physical link quality metric $LQM_w$ is an estimation or measurement of a signal-to-noise ratio of the wireless communication channel 125. For example, the physical link quality metric $LQM_w$ value is set by the receiver 130 and fed back to the transmitter 115. For example, the physical link quality metric $LQM_w$ is derived based on channel state information (statistical and/or dynamic) on the wireless propagation environment. For example, the larger the distortions introduced by the physical channel, the poorer the quality of the physical channel.

For example, a look-up-table is generated or available in the memory of the transmitter 115. The look-up-table for example maps the physical link quality metric $LQM_w$ to the semantic transmission 510 effectiveness, for example estimated using a "bilingual evaluation understudy" (BLUE) algorithm. The look-up-table for example maps a discrete set of possible known wireless channel configuration modes to, the physical link quality metric $LQM_w$ so that one or more wireless channel configuration modes are selected for a given value of the physical link quality metric $LQM_w$. A wireless channel configuration mode for example comprises a semantic extraction function and a semantic interpretation function.

For example, an estimation of a signal-to-noise ratio of the wireless communication channel 125 is used to identify the possible wireless channel configuration modes. In particular, the higher the signal-to-noise ratio, the greater the rate of communication of the selected wireless channel configuration mode. For example, a first mode corresponds to bi-phase shift keying (BPSK) at a rate of communication of ¾ and a fifth mode corresponds to a 16-quadrature modulation (QAM) at a rate of communication of ½.

According to one embodiment, the transmitter 115, for example the semantic encoder 437, selects the one or more wireless channel configuration modes.

According to another embodiment, the receiver 130 selects the one or more wireless channel configuration modes and sends them to the transmitter 115.

According to another embodiment, a central unit, not illustrated in the figures, for example a hyper supervisor, selects the one or more wireless channel configuration modes and sends them to the transmitter 115.

In this step, the impact of the wireless communication medium on the semantic transmission is estimated, for example without taking into account the semantic channel quality.

The process for example comprises a fourth step 640 ("Quality value assignment") following the third step 630, a quality value is assigned by the transmitter 115, for example by the semantic encoder 437, to the joint semantic and wireless channel for example based on the semantic link quality metric $LQM_{sem}$, the physical link quality metric $LQM_w$ and the one or more selected wireless channel configuration modes. Any transformation or adaptation will be performed in subsequent steps.

The quality value for example takes into account the robustness of the wireless communication channel 125 after possible transformations that will be applied in the subsequent steps. The possible transformations include adaptive modulation coding, power allocation, interference cancellation, waveform shaping, MIMO device 435 configuration.

According to one embodiment, the quality value is a macroscopic indication, for example "good", "not good enough" or "too good". For example, the quality value is a multilevel semantic value.

For example, a first level, noted "L-0", corresponds to a joint semantic and wireless channel that is "good". There is no need for a semantic or wireless channel adaptation. The semantic communication parameters are for example not changed; for example the parameters of the semantic extractor 410 and of the semantic decoder are unchanged from a previous communication attempt and the parameters of the channel encoder 420, the modulation 425 and waveform 430 circuits are unchanged from a previous communication attempt. As an example, this means that the wireless communication channel 125 is good for semantic communications. This means that a degradation of the wireless communication channel 125 quality introduced by the first semantic transformation $T_{sem}^1$ and the second semantic transformation $T_{sem}^2$ is for example acceptable.

For example, a second level, noted "L-1", corresponds to a joint semantic and wireless channel that is "not good enough". At least one of the semantic and wireless channels is for example to be adapted to improve on the quality of the semantic transmission 510. For example, the signal-to-noise ratio of the wireless communication channel 125 is too low for a current wireless channel communication mode.

For example, a first sub-level of the second level, noted "L-1-a", corresponds to an adaptation at the semantic level only. For example, an operational point or region for a semantic trade-off is re-computed. The semantic trade-off for example corresponds to robustness versus compression or energy efficiency versus robustness. In consequence, the parameters of the semantic communication chain are updated. In this example, the adaptation of the semantic channel is done without considering constraints on the wireless channel, such as performance.

For example, a second sub-level of the second level, noted "L-1-b", corresponds to an adaptation at the wireless level only. For example, an operational point or region for a wireless trade-off is re-computed. The wireless trade-off for example corresponds to robustness versus compression or energy efficiency versus robustness. In consequence, the parameters of the wireless channel are updated. In this example, the adaptation of the semantic channel is done considering an improvement of the performance of the wireless channel.

For example, a third sub-level of the second level, noted "L-1-c", corresponds to a joint semantic and wireless channel adaptation. For example, the adaptations mentioned in the previous two examples are implemented iteratively. Therefore, the adaptation is constrained to improve the performance of the wireless channel while considering that part of such improvement is achieved at the semantic level, for example by the semantic equalizer 415, 465 or by the semantic encoder 437 performing, at the physical level, an alignment of the first and second semantic latent spaces 417, 467.

For example, a third level, noted "L-2", corresponds to a joint semantic and wireless channel that is "too good". The current wireless channel and the adaptive mechanism configuration exceed the needs for successful semantic communication. The current signal-to-noise ratio of the wireless communication channel 125 is for example higher than a threshold value. For example, sub-levels of the third level can be defined according to a similar approach to the one used for the second level. The sub-levels for example indicate whether the semantic channel, the wireless channel or both should be adapted. However, in this case, the aim is to degrade the quality of the transmission, for example to save energy. At the semantic level, a compression is increased, for example adopting a many-to-one semantic symbol representation, and/or a less robust communication configuration of the wireless channel is used. According to an alternative embodiment, the wireless communication system 100 is left unchanged.

For example, a fourth level, noted "L-3", corresponds to an unreliable estimation or prediction of metrics related to the wireless channel and the semantic channel. For example, there is an unreliable availability of the physical link quality metric $LQM_w$ and/or of the best wireless channel communication mode for semantic transmission 510. Safety margin techniques are for example adopted, thereby pushing adaptation strategies for a more robust selection of the set of adapted parameters. In this example, an average value is for example used for the semantic link quality metric $LQM_{sem}$, the physical link quality metric $LQM_w$ and the one or more selected wireless channel configuration modes.

The process for example comprises a fifth step 650 ("Physical transformation computation") following the fourth step 640, a physical transformation T to be applied to a physical layer of the MIMO device 435 is computed by the transmitter 115, for example by the semantic encoder 437.

For example, a set of possible physical transformations T is selected and, for each physical transformation T, its parameters are identified, the parameters representing degrees of freedom to be optimized. The possible physical transformations T include linear transformations, non-linear transformations and a combination of linear and non-linear transformations.

Linear transformations are for example a latent space rotation, dilation, translation, etc. Such linear transformations are for example formally represented as matrices.

Non-linear transformations are for example the use of artificial neural networks, the use of any of polynomial, logarithmic or Piecewise functions, the use of Reproducing Kernel Hilbert Spaces (RKHS) based functions, etc.

For example, a metric of semantic alignment or a set of candidate metrics or a composition of metrics is selected, such as Cosine similarity, Semantic space distance, Frechet Inception distance, Kullback-Liber Divergence, Jensen-Shannon Divergence, procrustes analysis, etc.

For example, constraints from hardware are identified. The constraints are for example related to: quantization having a maximum number of bits per input-output element of the MIMO device 435; a maximum of the operation frequency that for example limits a carrier frequency; complexity; a number of available antennas at the transmitter 115 and/or receiver 130; the spectrum use, for example a use of a signal mask; available transmission power at the transmitter 115 and at the MIMO device 435; availability and complexity budget for additional semantic equalization at the transmitter 115 and/or receiver 130; lack of angular spatial coherence; etc.

Based on the second 620 and third 630 steps, an estimation of the current parameters and quality of the semantic and wireless channels respectively is obtained. For example, a representation of the degrees of freedom to be optimized in the first semantic transformation $T_{sem}^1$ and/or in the second semantic transformation $T_{sem}^2$ is obtained as well as the set of one or more wireless channel configuration modes.

Further based on the quality value set at the fourth step 640, the optimization constraints of the physical layer of the MIMO device 435 are computed by the semantic encoder 437 of the transmitter 115. The parameters of the MIMO device 435 before and after the application of a physical transformation T out of the set of possible physical transformations T are for example compared.

Finally, semantic alignment is performed by selecting the physical transformation T out of the set of possible physical transformations T and by optimizing the parameters of the selected physical transformation T for example so as to reduce the metric of semantic alignment.

Several strategies are for example used to select the physical transformation T:

- identifying the physical transformation T for which semantic alignment at the receiver 130 is not required to achieve correct and/or effective semantic interpretation by the receiver 130. This reduces the complexity and energy costs of the receiver 130, for example by removing the second semantic equalizer 465 from the receiver 130. Furthermore, a simpler receiver device is compatible with this semantic alignment.

- identifying the physical transformation T for which semantic alignment at the transmitter 115 is not required to achieve correct and/or effective semantic interpretation by the receiver 130. This reduces the complexity and energy costs of the transmitter 115, for example by removing the first semantic equalizer 415 from the transmitter 115. Furthermore, a simpler transmitter device is compatible with this semantic alignment. In addition, the semantic signaling and control is reduced if the estimation of the quality of the semantic channel is operated by the receiver 130 and fed back to the transmitter 115.

- identifying the physical transformation T for which semantic alignment at the transmitter and receiver is not required to achieve correct and/or effective semantic interpretation by the receiver 130. For example, the first 415 and the second 465 semantic equalizer are removed.

- identifying the physical transformation T by taking into account that at least one of the second semantic transformation $T_{sem}^2$ performed by the second semantic equalizer 465 and the first semantic transformation $T_{sem}^1$ performed by the first semantic equalizer 415 is known, fixed or estimated.

- identifying the physical transformation T by taking into account that at least one of the first semantic transformation $T_{sem}^1$ performed by the first semantic equalizer 415 and the second semantic transformation $T_{sem}^2$ performed by the second semantic equalizer 465 belong to a class of measurable and known transformations. For example, they belong to the known codebook of transformation.

- identifying the physical transformation T by taking into account that at least one of the first semantic transformation $T_{sem}^1$ performed by the first semantic equalizer 415 and the second semantic transformation $T_{sem}^2$ performed by the second semantic equalizer 465 has a complexity that is lower than a target. For example, their parameters that represent the degrees of freedom to be optimized are lower than the target.

The fifth step 650 can also be implemented as an iterative process that first identify candidate transformations and then selects a subset of more suitable transformations based on: complexity, energy consumption or requirements of machine learning modules and their training to be operated.

The process for example comprises a sixth step 660 ("Physical transformation application") following the fifth step 650, the transmitter 115 sets or adapts the parameters of a physical layer of the MIMO device 435 to operate the physical transformation T to compensate for an alteration of the semantic symbol.

For example, parameters of the MIMO device 435 include:

- phase shifts: each input-output element of the MIMO device 435 is configured to introduce a specific phase shift to a reflected signal. By adjusting the phase shifts across the elements, the direction and shape of the reflected signal is controlled. This operates a transformation on the outputted latent spaces from the MIMO device 435.

- a quantization of the input-output elements of the MIMO.

- an adjustment of the amplitude modulation applied to the reflected signal from each input-output element. This can help in controlling the strength of the reflected signal in different directions.;

- an adaptive frequency response applied to the reflected signal. The input-output elements can be designed to selectively reflect certain frequencies while attenuating others. This selective frequency response can be used to filter and shape the signal spectrum.

- a modification of the polarization state of the reflected signal.
- the number of active input-output elements of the MIMO device 435 to modulate the distance between adjacent active input-output elements. Therefore, the physical layout and spacing of the input-output elements influence the overall signal transformation that shapes the transformation on the latent spaces.

The process for example comprises a seventh step 670 ("Semantic symbol is sent") following the sixth step 660, the semantic concept or the semantic symbol is sent by the transmitter 115 to the receiver 130 over the wireless communication channel 125.

The process for example comprises an eighth step 680 ("Impact of the physical transformation estimation") following the seventh step 670, the receiver 130 estimates the impact of the physical transformation T on the semantic transmission 510. This estimation is for example sent to the transmitter 115 to estimate the quality of the semantic channel at the second step.

The process for example comprises a ninth step 690 ("Semantic equalization at the receiver") following the eighth step 680 or directly the seventh step 670, the receiver 130 defines the second semantic transformation $T_{sem}^2$ needed on the receiver side to compensate for a latent space misalignment of the semantic channel.

An overall transformation $T_{100}$ introduced by the communication system 100 is a composition of transformation functions introduced by the joint semantic and wireless channel and by the circuits of the communication system 100.

The complexity, cost and effectiveness of each transformation for example depends on:

- the nature of the communication environment, for example wireless, semantic, etc.;
- the available side information;
- the other transformations to be part of the composition and the order of the transformations in the composition;
- the cost of the estimation of the transformation, which depends on the number of parameters associated to be estimated and the possible degrees of non-linearity of the transformation;
- the architecture of the communication system 100; and
- the cost of the reconfiguration of the communication system 100.

The process 600 artificially programs the wireless communication channel 125 via the setting of the parameters of the MIMO device 435 to apply the measurable physical transformation T to the latent space representation at the receiver side of the wireless communication channel 125. The wireless communication channel 125 is for example cascaded with other physical layer functions, such as for instance modulator 425, waveform shaping 430 and antennas, prior to the transmission into the physical wireless channel 125. The physical transformation T creates a more favorable communication environment for the exchange of semantic symbols over wireless links. Such transformation operates a semantic alignment in the semantic domain.

Figure 7 illustrates an example of semantic extraction according to another example embodiment of the present disclosure.

According to one embodiment, the first agent 105 of Figures 1, 4 and 5 is a camera fixed on a self-driving car and the second agent 110 of Figures 1, 4 and 5 is a processor of the self-driving car.

For example, the raw data w is a picture 710 ("LIVESTREAM") acquired by the first agent 105. The picture 710 for example comprises objects in a natural scene.

The semantic extractor 410 of Figure 4 is for example configured to extract a nature 720 of the objects of the picture 710 and a relationship between the objects. For example, the nature 720 is one of the following categories: "Sky", "Building", "Pole", "Road Marking", "Road", "Pavement", "Tree", "Sign Symbol", "Fence", "Vehicle", "Pedestrian" and "Bike". The picture 710 is for example segmented and categorized by the semantic extractor 410. An example of a categorized image 730 is illustrated.

The language of a semantic extractor working on data from the camera is for example different from the language of the processor of the self-driving car. For example, they do not encode the elements similarly in terms of bits or they do not have the same number of categories, etc. In addition, the transmission of the information over a wireless communication channel of the self-driving car for example introduces transformations such as noise.

In the example of Figure 7, the semantic encoder 437 of Figure 4 of a transmitter of the camera performs the process 600 detailed in relation with Figure 6 in order to define the physical transformation T and configure a MIMO device of the wireless communication channel of the self-driving car to perform the physical transformation T.

As a result, the semantic concepts extracted by the semantic extractor 410 become interpretable by a receiver of the processor of the self-driving car. Based on the semantic concepts, the processor of the self-driving car is for example able to make decisions on the next movements of the self-driving car.

The communication system 100 of the embodiments described herein has one transmitter 115 and one receiver 130. In alternative embodiments, the communication system 100 further comprises:

- one or more further transmitters, each further transmitter being configured to transmit the semantic symbol over the wireless communication channel 125 to the receiver 130; and

- one or more further MIMO devices, each further MIMO device being configured to relay the semantic symbol from the transmitter 115 or one of the one or more further transmitters to the receiver 130.

In alternative embodiments, the communication system 100 further comprises:

- one or more further receivers, each further receiver being configured to receive the semantic symbol over the wireless communication channel 125 from the transmitter 115; and

- one or more further MIMO devices, each further MIMO device being configured to relay the semantic symbol from the transmitter 115 to the receiver 130 or one of the one or more further receivers.

An advantage of the embodiments described herein is that semantic equalization is performed at the physical level.

Another advantage of the embodiments described herein is the possibility to have a dual use of the MIMO device 435. For example, the MIMO device 435 serves the dual purpose of transmitting messages and improving the transmission of the semantic message x.

Another advantage is to have an additional degree of freedom in a cost of transmission due to the reconfiguration of the MIMO device 435 according to both physical and semantic constraints.

Another advantage is that transformations on the semantic message x, introduced by the presence of the MIMO device 435 in the wireless communication channel 125, are taken into account and compensated for.

Several trade-offs are for example considered in the fifth step 650 of the process '600, such as robustness versus compression of the transmission and robustness versus quality of transmission. The process 600 for example results in a better compression and therefore more efficient transmission than without the reconfiguration of the MIMO device 435 while considering the impact on the semantic level.

The communication system 100 for example has applications in the Industry 4.0, in the automotive industry, in the collaboration between robots, in the use of a Metaverse, in the telecommunication industry, etc.

Various embodiments and variants have been described. Those skilled in the art will understand that certain features of these embodiments can be combined and other variants will readily occur to those skilled in the art. In particular, the process 600 described in relation with Figure 6 comprises a series of steps. It will be apparent to those skilled in the art that some of these steps could be omitted and that the steps could be performed in a different order.

Finally, the practical implementation of the embodiments and variants described herein is within the capabilities of those skilled in the art based on the functional description provided hereinabove.

**Claims**

1. A method of transmitting a semantic symbol from a transmitter (115) to a receiver (130) over a wireless communication channel (125), the method comprising:

    - relaying the semantic symbol from the transmitter (115) to the receiver (130) by a multiple-input multiple-output (MIMO) device (435) comprising a plurality of input-output elements; and
    - controlling by the transmitter (115) a physical transformation (T) of a physical layer of the MIMO device (435) to compensate for an alteration of the semantic symbol between the transmitter (115) and the receiver (130).

2. The method according to claim 1, further comprising estimating, by the transmitter (115), a semantic transformation $(T_{sem}^1)$ to be applied to the semantic symbol prior to the transmission in order to obtain a transparent semantic channel.

3. The method according to claim 1 or 2, further comprising estimating, by the transmitter (115), by the receiver (130) or by a central unit, a quality $(LQM_w)$ of a physical layer of the wireless communication channel.

4. The method according to claim 3 when dependent on claim 2, further comprising an estimation of the physical transformation (T) to be applied to the MIMO device (435) based on the estimation of the semantic transformation $(T_{sem}^1)$ and based on the quality $(LQM_w)$ of the physical layer of the wireless communication channel.

5. The method according to claim 4, wherein the estimation of the physical transformation (T) is performed by the transmitter (115).

6. The method according to claim 4, wherein the estimation of the physical transformation is performed by the MIMO device (435) .

7. The method according to any of claims 1 to 6, wherein the physical transformation (T) includes the modification of at least one of:

    - a phase shift introduced by the input-output elements of the MIMO device (435);
    - quantization of the input-output elements of the MIMO device (435);

- an amplitude modulation applied to a signal transmitting the semantic symbol;
- an adaptive frequency response applied to the signal transmitting the semantic symbol;
- a polarization of the signal transmitting the semantic symbol; and
- the number of active input-output elements of the MIMO device (435).

8. The method according to any of claims 1 to 7, further comprising estimating, by the receiver (130), the impact of the physical transformation (T) on the semantic symbol.

9. The method according to any of claims 1 to 8, wherein the MIMO device (435) is a reconfigurable intelligent surface (RIS).

10. The method according to any of claims 1 to 9, wherein the input-output elements are reflective elements.

11. The method according to any of claims 1 to 9, wherein the input-output elements are antenna elements.

12. A communication system comprising:

- a transmitter (115) configured to transmit a semantic symbol over a wireless communication channel (125) to a receiver (130); and
- a MIMO device (435) comprising a plurality of antenna elements and configured to relay the semantic symbol from the transmitter (115) to the receiver (130),

wherein the transmitter (115) is configured to control the MIMO device (435) to apply a physical transformation (T) of a physical layer of a MIMO device (435) to compensate for an alteration of the semantic symbol between the transmitter (115) and the receiver (130).

13. The system according to claim 12, further comprising:

- one or more further transmitters, each further transmitter being configured to transmit the semantic symbol over the wireless communication channel (125) to the receiver (130); and
- one or more further MIMO devices, each further MIMO device being configured to relay the semantic symbol from the transmitter (115) or one of the one or more further transmitters to the receiver (130).

14. The system according to claim 12, further comprising:

- one or more further receivers, each further receiver being configured to receive the semantic symbol over the wireless communication channel (125) from the transmitter (115); and
- one or more further MIMO devices, each further MIMO device being configured to relay the semantic symbol from the transmitter (115) to the receiver (130) or one of the one or more further receivers.

FIG 1

FIG 2

FIG 3

FIG 4

FIG 5

FIG 7

600

```
Semantic symbol to be shared          610

Semantic channel estimation          620

Quality of wireless communication     630
channel estimation

Quality value assignment              640

Physical transformation              650
computation

Physical transformation              660
application

Semantic symbol is sent              670

Impact of the physical               680
transformation estimation

Semantic equalization                690
at the receiver
```

FIG 6

Europäisches
Patentamt

European
Patent Office

Office européen
des brevets

# EUROPEAN SEARCH REPORT

**Application Number**

EP 24 31 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 387 171 A1 (COMMISSARIAT ENERGIE ATOMIQUE [FR]) 19 June 2024 (2024-06-19) * paragraphs [0009], [0039] - paragraph [0052]; figure 1 * * paragraphs [0017], [0018], [0029], [0031], [0036] * | 1-14 | INV.<br>H04B7/024<br>H04B7/04<br>H04B7/0413<br>H04B7/06<br>H04L1/00 |
| A | EP 4 447 349 A1 (COMMISSARIAT ENERGIE ATOMIQUE [FR]) 16 October 2024 (2024-10-16) * paragraphs [0017], [0021] - paragraph [0026]; figure 1 * | 1-14 | |
| A | SANA MOHAMED ET AL: "Semantic Channel Equalizer: Modelling Language Mismatch in Multi-User Semantic Communications", GLOBECOM 2023 - 2023 IEEE GLOBAL COMMUNICATIONS CONFERENCE, IEEE, 4 December 2023 (2023-12-04), pages 2221-2226, XP034554991, DOI: 10.1109/GLOBECOM54140.2023.10437371 [retrieved on 2024-02-26] * abstract; figure 1 * * page 2 * | 1-14 | |

| | | | TECHNICAL FIELDS SEARCHED (IPC) |
|---|---|---|---|
| | | | H04B<br>H04L |

The present search report has been drawn up for all claims

| Place of search | Date of completion of the search | Examiner |
|---|---|---|
| Munich | 23 May 2025 | Oana, Andrei |

EPO FORM 1503 03.82 (P04C01)

## ANNEX TO THE EUROPEAN SEARCH REPORT
## ON EUROPEAN PATENT APPLICATION NO.

EP 24 31 5597

This annex lists the patent family members relating to the patent documents cited in  the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | Publication date |
|---|---|---|---|---|
| EP 4387171 | A1 | 19-06-2024 | NONE | |
| EP 4447349 | A1 | 16-10-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. CALVANESE STRINATI**. Reconfigurable, intelligent, and sustainable wireless environments for 6G smart connectivity. *IEEE Communications Magazine*, 2021